# EUROPÄISCHE PATENTSCHRIFT

(11) **EP 2 522 850 B1**
(45) Veröffentlichungstag und Bekanntmachung des Hinweises auf die Patenterteilung: **08.11.2017**
(21) Anmeldenummer: 12001493.1
(22) Anmeldetag: 06.03.2012
(51) Int. Cl.: F03D 1/00, E04B 1/98, E04H 12/00, F03D 13/20

(54) **Turmschwingungstilger und Turm mit einem Turmschwingungstilger**
Tower vibration absorber and tower with same
Réducteur de vibrations pour tour et tour dotée d'un réducteur de vibrations pour tour

(30) Priorität: 12.05.2011 DE 102011101271
(43) Veröffentlichungstag der Anmeldung: 14.11.2012
(73) Patentinhaber: Wölfel Beratende Ingenieure GmbH & Co. KG, 97204 Höchberg (DE)
(72) Erfinder: KATZ, Sebastian, 97082 Würzburg (DE); PANKOKE, Steffen, 97837 Erlenbach (DE)
(74) Vertreter: Knoblauch, Andreas

(56) Entgegenhaltungen:
- EP-A2- 1 008 747
- WO-A1-2004/003306
- DE-C1- 4 313 835
- JP-A- H1 137 212
- JP-A- H03 113 143

## Beschreibung

Die Erfindung betrifft einen Turmschwingungstilger, insbesondere für eine Windenergieanlage, der ein erstes Pendel mit einer ersten Pendellänge und einer ersten Masse aufweist, das als hängendes Pendel ausgebildet ist.

Ferner betrifft die Erfindung einen Turm mit einem derartigen Turmschwingungstilger.

Bei Türmen, also bei hohen, schlanken Bauwerken, treten aufgrund von äußeren Einflüssen häufig Schwingungen auf. Beispielsweise bei Windenergieanlagen, die einen schlanken, hohen Turm aufweisen, an dessen Kopf ein Maschinenträger mit einem Rotor angeordnet ist, an dem Rotorblätter befestigt sind, sind dabei Bauhöhen von mehr als 100 m und mehr üblich. Bei Offshore-Windenergieanlagen erhöht sich dabei die Gesamtanlagenhöhe nochmals durch die erforderlichen Fundamente.

Durch die Bewegung des Rotors und durch weitere Umwelteinflüsse, wie beispielsweise durch eine Wellenbewegung, die auf das Fundament bei Offshore-Windenergieanlagen wirkt, wird ein derartiger Turm bzw. eine Windenergieanlage zu Schwingungen angeregt. Aus ökonomischen und aus technischen Gründen werden diese Türme nicht übermäßig steif konstruiert, was dazu führt, dass sie eine relativ niedrige erste Eigenfrequenz aufweisen. Diese erste Eigenfrequenz, die häufig deutlich unterhalb von 1 Hz liegt, liegt dabei in einem Bereich, in dem häufig eine Anregung erfolgt.

Eine Anpassung der konstruktiven Auslegung des Turms der Windenergieanlage darauf, dass relevante Eigenfrequenzen außerhalb dieses Frequenzbereichs liegen, ist mit einem relativ großen baulichen Aufwand verbunden und daher in der Regel unerwünscht.

Es ist daher zum Beispiel aus DE 198 56 500 A1 bekannt, im Turm einer Windenergieanlage einen Turmschwingungstilger anzuordnen, der ein Pendel aufweist. Dabei ist eine Resonanzfrequenz des Pendels auf eine Eigenfrequenz des Turmes abgestimmt. Gegebenenfalls kann eine aktive Ansteuerung des Pendels erfolgen, um eine gezielte, aktive Dämpfung zu erreichen.

Damit ein derartiges Pendel eine geringere Resonanzfrequenz von weniger als 1 Hz aufweist, muss eine relativ große Pendellänge vorgesehen werden oder mit zusätzlichen Hilfsmitteln, wie beispielsweise Federn, dafür gesorgt werden, dass die Resonanzfrequenz des Pendels ausreichend niedrig ist. Diese unter anderem in DE 198 56 500 A1 beschriebenen Lösungen sind aber relativ aufwändig. Ein weiteres Beispiel aus dem Stand der Technik wird in JPH1137212 offenbart.

Der Erfindung liegt nun die Aufgabe zugrunde, einen Turmschwingungstilger mit niedriger Eigenfrequenz bereitzustellen.

Erfindungsgemäß wird diese Aufgabe durch einen Turmschwingungstilger gemäß Anspruch 1 gelöst.

Das erste Pendel und das zweite Pendel bilden also ein Doppelpendel, wobei das erste Pendel ein stabiles, hängendes Pendel ist und das zweite Pendel ein instabiles, inverses Pendel. Eine Wirkrichtung der Pendel ist dabei in einer Ebene orthogonal zur Turmachse, also in einer horizontalen Ebene, frei einstellbar, so dass auf Schwingungen aus unterschiedlichen Richtungen reagiert werden kann. Durch die Kombination des ersten Pendels mit dem zweiten Pendel lässt sich die Bauhöhe des Turmschwingungstilgers signifikant verringern und dabei sehr niedrige Resonanzfrequenzen erreichen. Dabei kann eine Einstellung der Resonanzfrequenz durch die Auswahl der Pendellängen, der Massen sowie des Massenverhältnisses erfolgen. Die Resonanzfrequenz des Turmschwingungstilgers ist also frei einstellbar.

Dabei ist besonders bevorzugt, dass das Koppelelement einen Höhenversatz in der ersten Masse und der zweiten Masse zulässt. Das Koppelelement koppelt die erste und die zweite Masse also nur in Wirkrichtung aneinander, also in einer horizontalen Ebene. Ein Höhenversatz wird dagegen zugelassen. Dadurch wird auch eine größere Auslenkung der Pendel durch das Koppelelement nicht behindert. Bevorzugterweise ist ein Verhältnis der ersten Masse zur zweiten Masse größer als ein Verhältnis der ersten Pendellänge zur zweiten Pendellänge. Dadurch ist ein stabiles Verhalten des Turmschwingungstilgers gewährleistet, auch wenn dieser rein passiv betrieben wird. Durch die Wahl der Verhältnisse lässt sich dabei die Resonanzfrequenz des Turmschwingungstilgers sehr genau einstellen, so dass sie deutlich niedriger ist, als bei einem einfach ausgeführten Pendel gleicher Bauhöhe.

Vorzugsweise ist eine Resonanzfrequenz des Systems aus erstem Pendel und zweitem Pendel kleiner oder gleich einer Eigenfrequenz des Turms. Eine derartig niedrige Resonanzfrequenz, die weniger als eine Eigenfrequenz des Turmes ist, ermöglicht eine vereinfachte Regelungsstrategie. Eine genau abgestimmte Resonanzfrequenz auf eine Eigenfrequenz des Turms ist dabei für eine passive Ausbildung des Turmschwingungstilgers günstig. Dabei erfolgt eine gegenüber der Schwingung des Turms phasenversetzte Schwingung der Pendel derart, dass eine Dämpfung der Schwingungen erfolgt.

Vorzugsweise ist die erste Pendellänge und/oder die zweite Pendellänge veränderbar. Die Pendellänge lässt sich also auch bei bereits montierten Turmschwingungstilgern einstellen, wodurch die Resonanzfrequenz des Turmschwingungstilgers effektiv beeinflusst werden kann. Vorzugsweise ist die erste Masse und/oder die zweite Masse veränderbar. Durch eine Veränderung der Massen bzw. des Masseverhältnisses lässt sich ebenfalls die Resonanzfrequenz des Turmschwingungstilgers beeinflussen und damit der Turmschwingungstilger gut auf den jeweiligen Turm abstimmen. Erfindungsgemäß ist mindestens ein Aktuator vorgesehen, mit dem die Pendel zu Schwingungen anregbar sind, wobei insbesondere mindestens zwei Aktuatoren vorgesehen sind, die zueinander senkrechte Wirkrichtungen aufweisen. Der Turmschwingungstilger ist also als aktiver Schwingungstilger ausgebildet. Dadurch lässt sich auch bei relativ geringen Massen eine effektive Schwingungsdämpfung erreichen. Gleichzeitig ist es möglich, ein relativ großes Frequenzspektrum abzudecken, wobei eine Resonanzfrequenz des Turmschwingungstilgers aber möglichst unterhalb einer ersten Eigenfrequenz des Turmes liegen sollte, um ein einfaches Regelverhalten zu erhalten. Erfindungsgemäß ist vorgesehen, dass der Turmschwingungstilger mindestens einen Schwingungssensor und einen Regler aufweist, wobei die Aktuatoren in Abhängigkeit von erfassten Schwingungen angesteuert werden. Die Ansteuerung erfolgt dabei derart phasenversetzt, dass eine Dämpfung bzw. eine Auslöschung der Schwingungen des Turms durch die Schwingungen der Pendel erfolgt. Dabei kann mit Hilfe des Schwingungssensors auch die Richtung der Schwingungen erfasst werden, so dass die Wirkrichtung in horizontaler Ebene des Turmschwingungstilgers entsprechend eingestellt wird. Dies kann beispielsweise durch eine entsprechende Anregung der Aktuatoren erfolgen. Erfindungsgemäß greift der Aktuator am Koppelelement an. Der oder die Aktuatoren wirken damit gleichermaßen auf die erste und die zweite Masse, da diese über das Koppelelement aneinander gekoppelt sind. Dadurch wird sichergestellt, dass sich das erste Pendel und das zweite Pendel im Gleichtakt bewegen und so eine effektive Schwingungsdämpfung erreichbar ist.

Vorzugsweise ist eine Resonanzfrequenz des ersten, hängenden Pendels auf eine Eigenfrequenz des Turmes abgestimmt. In diesem Fall kann auch bei Ausfall des Aktuators oder sonstiger Bestandteile der Regelung eine Notfunktion des Schwingungstilgers dadurch aufrechterhalten werden, dass die Kopplung der beiden Pendelmassen durch das Koppelelement aufgehoben wird. Das hängende, stabile Pendel arbeitet dann als Schwingungstilger in der für passive Tilger optimalen Abstimmung. In diesem Fall ist es weiterhin vorteilhaft, einen als elektrodynamischen Antrieb ausgebildeten Aktuator kurzzuschließen und so dessen passive Dämpfungseigenschaften zur Dämpfung des passiven Tilgers bzw. des ersten, stabilen Pendels zu nutzen.

Die Aufgabe wird auch durch einen Turm mit einem derartigen Turmschwingungstilger gelöst, wobei der Turmschwingungstilger im Bereich eines Schwingungsbauchs angeordnet ist, wobei der Turmschwingungstilger insbesondere im Bereich eines oberen Endes des Turms angeordnet ist.

Ein derartiger Turm kann dabei relativ leicht ausgebildet sein und eine hohe Bauhöhe aufweisen, besitzt aber dennoch eine geringe Schwingungsneigung. Durch die Anordnung des Turmschwingungstilgers im Bereich eines Schwingungsbauches, also auf einer Höhe des Turmes, in der der Turm bei Schwingungen mit einer Eigenfrequenz maximal ausgelenkt wird, ergibt sich eine effektive Schwingungsdämpfung. Eine Schwingung des Turms erfolgt dabei häufig nur im Bereich der ersten Eigenfrequenz oder der zweiten Eigenfrequenz, also in einem ersten oder zweiten Turmeigenmode. Im ersten Turmeigenmode, der im Bereich der ersten Eigenfrequenz auftritt, erfolgt dabei eine maximale Auslenkung des oberen, freien Endes des Turms, während das untere Ende des Turms nahezu unbeweglich bleibt. Für eine effektive Dämpfung dieser Schwingungen ist dabei eine Anordnung des Turmschwingungstilgers im oberen Bereich des Turmes günstig. Im zweiten Turmeigenmode erfolgt eine maximale Auslenkung des Turms unterhalb des oberen Endes, wobei auch bei dieser Form eine nennenswerte Auslenkung am oberen Turmende auftritt. Für eine effektive Dämpfung dieses zweiten Modes kann dann der Turmschwingungstilger entweder auf axialer Höhe des Schwingungsbauchs oder am oberen Turmende angeordnet werden.

In einer bevorzugten Ausgestaltung ist der Turm als Windenergieanlage ausgebildet. Der Turm trägt also einen Rotor mit Rotorblättern, der in einem Maschinenträger am oberen Ende des Turms gelagert ist. Der Rotor wird dabei durch Wind angetrieben und erzeugt in einem Generator elektrische Energie. Dabei erfolgt durch die Bewegung des Rotors eine zusätzliche Schwingungsanregung, die z.B. mit Hilfe des Turmschwingungstilgers gedämpft werden kann. Eine derartige Windenergieanlage weist daher eine relativ hohe Betriebssicherheit auf.

Die Erfindung wird im Folgenden anhand eines bevorzugten Ausführungsbeispiels in Verbindung mit der Zeichnung näher beschrieben. Hierin zeigen:
- Fig. 1: einen schematischen Aufbau eines Turmschwingungstilgers,
- Fig. 2: eine grafische Abhängigkeit der Eigenfrequenz von einem Masseverhältnis,
- Fig. 3: eine Prinzipdarstellung eines Regelkreises,
- Fig. 4: eine isometrische Modellansicht eines Turmschwingungstilgers,
- Fig. 5: eine Schnittansicht entlang einer Turmachse des Turmschwingungstilgers nach Fig. 4 und
- Fig. 6: eine Schnittansicht senkrecht zur Turmachse des Turmschwingungstilgers nach Fig. 4.

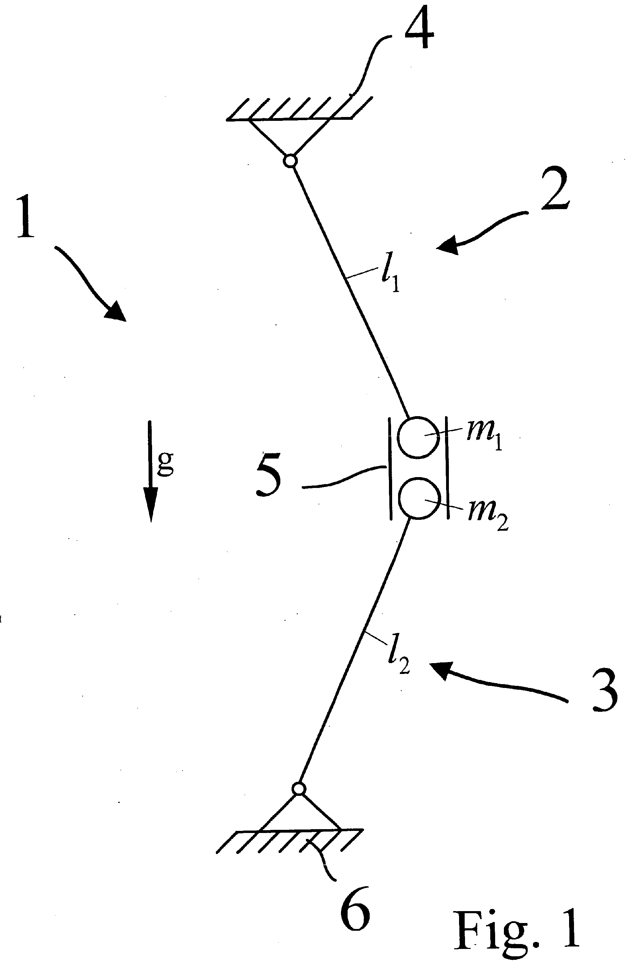

In Fig. 1 ist das zugrunde liegende mechanische Prinzip eines Turmschwingungstilgers 1 mit einem hängenden, ersten Pendel 2 und einem stehenden, zweiten Pendel 3 dargestellt. Der Turmschwingungstilger 1 ist dabei als Doppelpendel ausgebildet. Das erste Pendel 2 als hängendes Pendel ist ein stabiles Pendel mit einer Pendellänge l₁ und einer ersten Masse m₁. Die Masse m₁ ist dabei beispielsweise mit Hilfe von einem oder mehreren Seilen an einer oberen Basis 4 befestigt.

Das zweite Pendel 3, das als stehendes oder inverses Pendel ausgebildet ist, ist relativ instabil und in Schwerkraftrichtung unterhalb des ersten Pendels 2 angeordnet. Die Schwerkraftrichtung ist dabei durch einen Pfeil g gekennzeichnet. Das zweite Pendel 3 weist eine zweite Pendellänge l₂ und eine zweite Masse m₂ auf. Die Massen m₁, m₂ sind über ein Koppelelement 5 miteinander derart verbunden, dass eine Relativbewegung in Wirkrichtung, also in einer horizontalen Richtung, zwischen den Massen verhindert wird, während eine Bewegung in Schwerkraftrichtung, also ein Höhenversatz zwischen den Massen m₁, m₂, freigegeben ist. Damit sind auch größere, synchrone Auslenkungen der Pendel 2, 3 möglich.

Die zweite Masse m₂ des zweiten Pendels 3 ist beispielsweise über einen oder mehrere Stäbe an einer unteren Basis 6 gelagert.

Durch die Kopplung des ersten, hängenden Pendels 2 und des zweiten, stehenden Pendels 3 liegt eine resultierende, erste Resonanzfrequenz des Turmschwingungstilgers 1 unterhalb derjenigen des hängenden Pendels. Dabei kann durch die Wahl des Verhältnisses der ersten zur zweiten Masse und der ersten Pendellänge zur zweiten Pendellänge die Eigenfrequenz sehr frei eingestellt werden und insbesondere unterhalb einer Eigenfrequenz eines zu dämpfenden Bauwerks, wie eines Turmes, festgelegt werden. Insgesamt lässt sich damit eine sehr tief frequente Abstimmung erreichen, ohne dass die Gesamthöhe des Turmschwingungstilgers 1 unnötig groß wird.

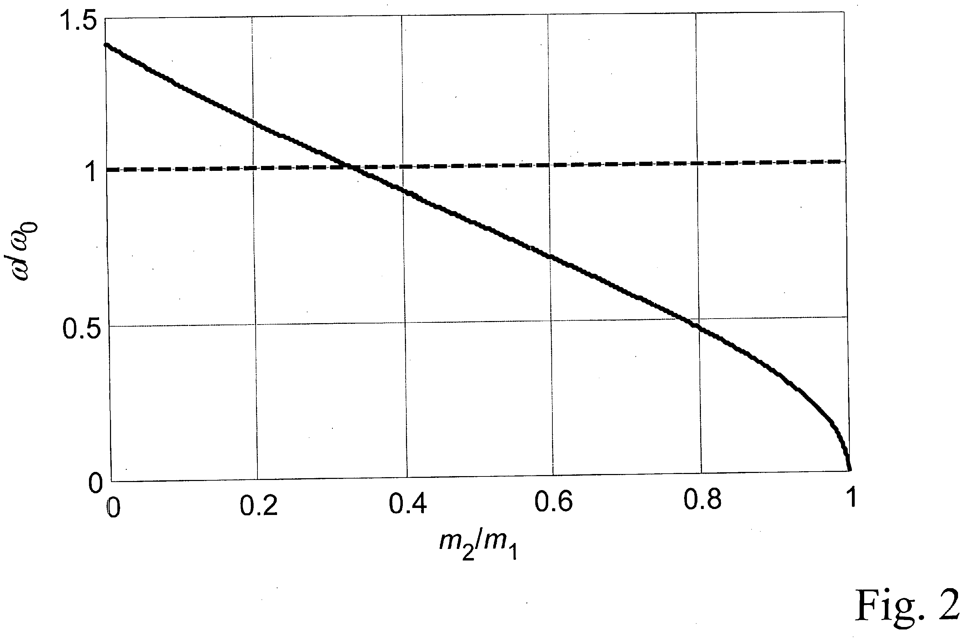

In Fig. 2 ist ein Verhältnis der Resonanzfrequenz des erfindungsgemäßen Turmschwingungstilgers normiert auf eine Resonanzfrequenz eines einfachen Pendels über einem Verhältnis der zweiten Masse m₂ zur ersten Masse m₁ aufgetragen. Ab einem Masseverhältnis von circa 0,33 ist die Resonanzfrequenz des erfindungsgemäßen Turmschwingungstilgers niedriger als eine Resonanzfrequenz eines Einfachpendels. Mit Zunahme des Masseverhältnisses nimmt dabei die Resonanzfrequenz weiter ab, wobei bei einem Masseverhältnis von größer 1 der erfindungsgemäße Turmschwingungstilger jedoch instabil wird.

Die gezeigte Darstellung gilt dabei für einen Turmschwingungstilger, bei dem die erste Pendellänge l₁ genauso groß ist wie die zweite Pendellänge l₂.

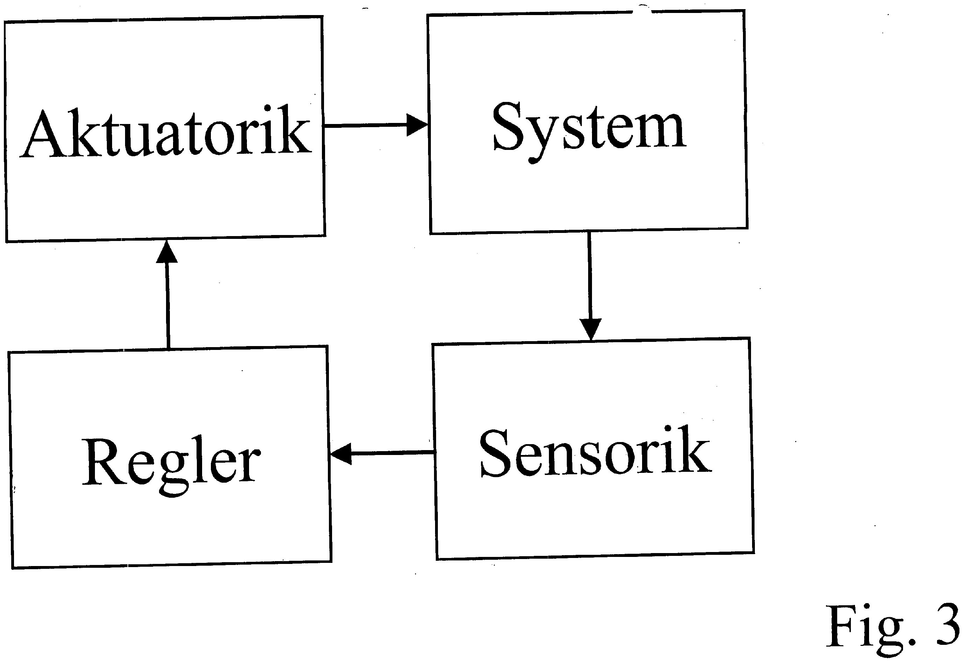

In Fig. 3 ist eine Prinzipdarstellung eines Regelkreises dargestellt, wie er verwendet wird, um den Turmschwingungstilger 1 als aktiven Tilger zu betreiben. Schwingungen des Systems, also eines Turmes, werden dabei mit Hilfe einer geeigneten Sensorik, also über Schwingungssensoren, erfasst. Die Signale werden an einen Regler übertragen, der daraus ein Stellsignal generiert, das an die Aktuatorik weitergegeben wird. Die Aktuatorik umfasst dabei Aktuatoren, die zur Auslenkung der Pendelmassen dienen. Durch entsprechende Auslegung kann dabei eine aktive Schwingungsdämpfung erfolgen, indem der Turmschwingungstilger derart phasenverschoben gegenüber Schwingungen des Turms angesteuert wird, dass eine Schwingungsreduktion oder sogar Auslöschung erfolgt. Ein derartiger Regelkreis gehört zum Stand der Technik und ist hier nur der Vollständigkeit halber mit aufgeführt.

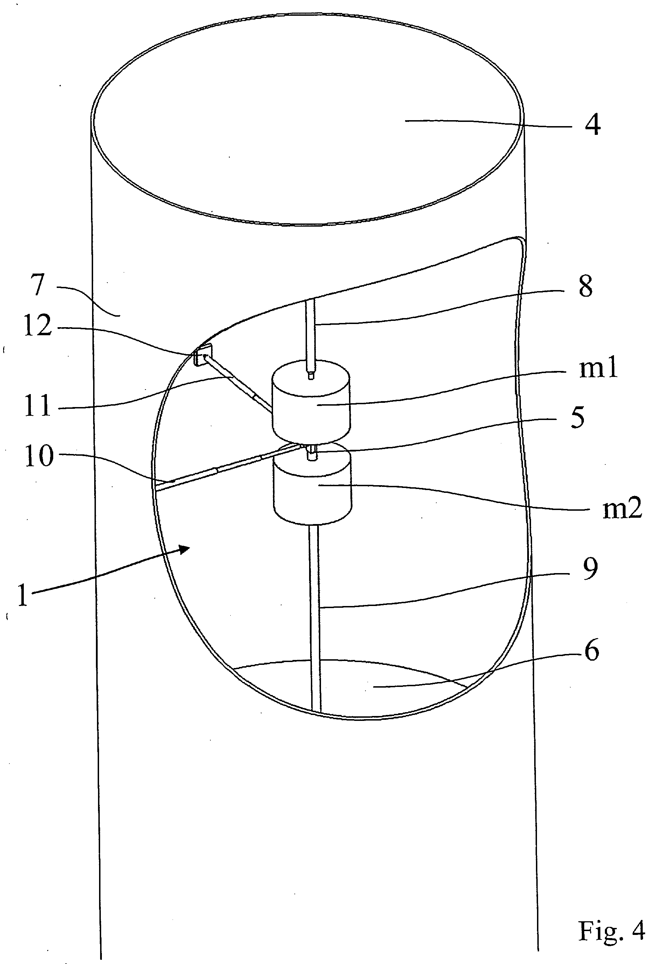

In Fig. 4 ist ein Modell des Turmschwingungstilgers 1, angeordnet in einem Turm 7, dargestellt. Die obere Basis 4 und die untere Basis 6 sind dabei im Turm 7 befestigt, so dass der Turmschwingungstilger 1 innerhalb des Turms 7 angeordnet ist. Die erste Masse m₁ ist über einen Stab 8, der die Pendellänge l₁ definiert, schwenkbar an der oberen Basis 4 befestigt. Die zweite Masse m₂ ist über einen entsprechenden zweiten Stab 9, der die Pendellänge l₂ definiert, an der unteren Basis 6 schwenkbar befestigt. Die erste Masse m₁ und die zweite Masse m₂ sind miteinander über das Kuppelelement 5 verbunden, an das zwei Aktuatoren 10, 11 angreifen, die zueinander senkrechte Wegrichtungen aufweisen. Die Aktuatoren 10, 11 wirken dabei in Wirkrichtung des Turmschwingungstilgers 1, also senkrecht zu einer Achse des Turms bzw. in einer horizontalen Ebene. Dabei kann in der horizontalen Ebene jede beliebige Wirkrichtung des Turmschwingungstilgers 1 eingestellt werden. Die Aktuatoren 10, 11 sind über Anschlusselemente 12 am Turm 7 befestigt.

Als Antriebsprinzip der Aktuatoren 10, 11 kommt eine Vielzahl von Ausbildungen infrage, beispielsweise können sie als hydraulische, pneumatische, elektromechanische oder elektrische Antriebe ausgebildet sein.

Zusätzlich zu den aktiven Aktuatoren 10, 11 können auch passive Elemente wie Dämpfer und Federn vorgesehen sein, um das Verhalten des Turmschwingungstilgers 1 zu beeinflussen.

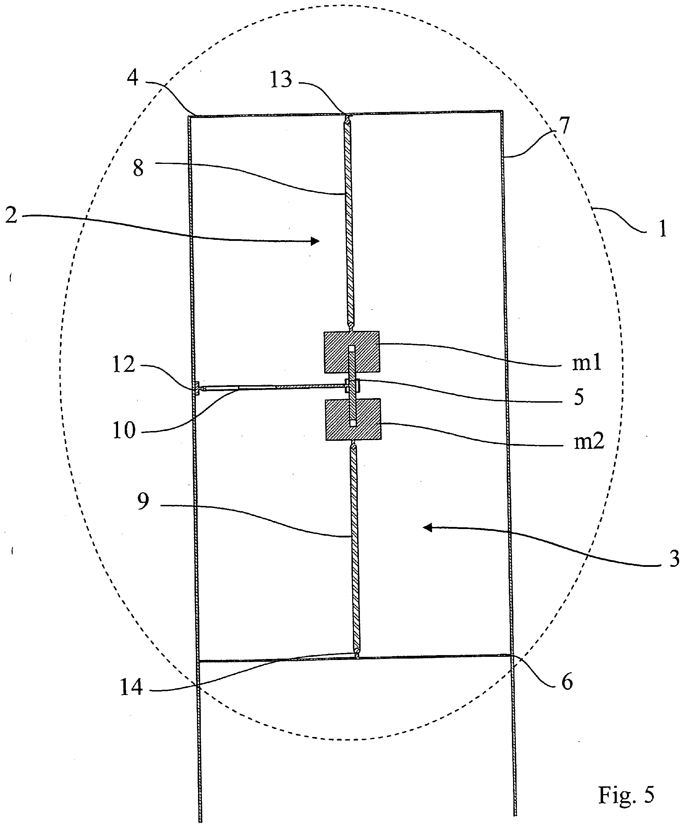

In Fig. 5 ist eine Schnittansicht des Turmschwingungstilgers nach Fig. 4 gezeigt. Gleiche Elemente sind dabei mit gleichen Bezugszeichen versehen. Der Stab 8 des oberen Pendels 2 ist dabei über ein Gelenk 13 an der oberen Basis 4 befestigt, das eine Schwingungsbewegung des ersten Pendels 2 in einer horizontalen Ebene zulässt, also in einer Ebene, die in die Zeichenebene nach Fig. 5 hineingeht. Das Gelenk 13 kann dafür beispielsweise als stoffschlüssiges Element ausgebildet sein, aber auch beispielsweise als Kardangelenk.

In entsprechender Weise ist der Stab 9 des zweiten Pendels 3 über ein Gelenk 14 an der unteren Basis 6 befestigt.

Das Koppelelement 5 ist als einfacher Stab ausgebildet, der in entsprechenden Öffnungen in der ersten Masse m₁ und der zweiten Masse m₂ geführt ist, so dass eine vertikale Relativbewegung zwischen der ersten Masse m₁ und der zweiten Masse m₂ ungehindert erfolgen kann, während eine horizontale Relativbewegung durch Formschluss verhindert wird.

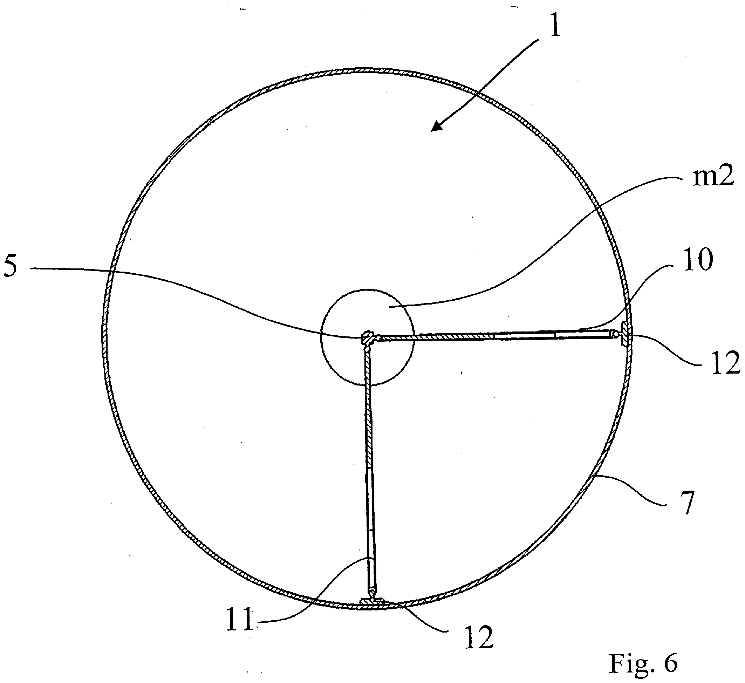

In Fig. 6 ist eine weitere Schnittdarstellung des Turmschwingungstilgers dargestellt, die den Turmschwingungstilger 1 mit dem Turm 7 in Draufsicht zeigt. Dabei sind wieder gleiche Elemente mit gleichen Bezugszeichen versehen.

Nicht dargestellt sind Sensoren der erforderlichen Sensorik sowie ein Regler, um eine aktive Ansteuerung des Turmschwingungstilgers und damit eine aktive Schwingungsdämpfung zu erreichen. Diese Sensoren, die insbesondere als Schwingungssensoren ausgebildet sind, können beispielsweise direkt an einer Wandung des Turms 7 befestigt werden und erfassen so Schwingungen des Turms 7, die im Regler dann zu Stellsignalen für die Aktuatoren 10, 11 umgesetzt werden.

Durch die erfindungsgemäße Ausbildung des Turmschwingungstilgers als Doppelpendel mit einem ersten, hängenden Pendel und einem zweiten, stehenden Pendel wird ein Turmschwingungstilger erreicht, der eine relativ geringe Höhe aufweist und dennoch eine niedrige Resonanzfrequenz besitzt. Dabei kann diese Resonanzfrequenz sehr frei durch Wahl der Pendellängenverhältnisse und Massenverhältnisse eingestellt werden. Dadurch kann der Turmschwingungstilger sehr genau auf eine Eigenfrequenz des Turms abgestimmt werden. Dabei ist es für die Ausbildung als aktiver Schwingungsdämpfer günstig, die Resonanzfrequenz des Turmschwingungstilgers möglichst niedrig einzustellen, um ein einfaches Regelverhalten zu erreichen. Auch dies ist mit dem erfindungsgemäßen Turmschwingungstilger relativ einfach möglich. Dabei kann durch die Ausführung als Doppelpendel die Reaktionsmasse des Turmschwingungstilgers, also die Massen m₁ und m₂, auch bei niedrigen Resonanzfrequenzen relativ weit oben im Turm angebracht werden. Dies ist insbesondere dann vorteilhaft, wenn Schwingungen im ersten Eigenmodus, also im Bereich der ersten Eigenfrequenz des Turms, gedämpft werden sollen.

Dabei eignet sich der erfindungsgemäße Turmschwingungstilger insbesondere für den Einsatz in Windenergieanlagen, bei denen eine Schwingungsdämpfung aufgrund ihrer beweglichen Rotoren und ihrer schlanken Ausführung wünschenswert ist.

## Patentansprüche

1. Turmschwingungstilger (1), insbesondere für eine Windenergieanlage, der ein erstes Pendel (2) mit einer ersten Pendellänge (l₁) und einer ersten Masse (m₁) aufweist, das als hängendes Pendel ausgebildet ist, wobei er ein zweites Pendel (3) mit einer zweiten Pendellänge (l₂) und einer zweiten Masse (m₂) aufweist, das als stehendes Pendel ausgebildet ist, wobei die erste Masse (m₁) und die zweite Masse (m₂) in Wirkrichtung über mindestens ein Koppelelement (5) aneinander gekoppelt sind, wobei mindestens ein Aktuator (10, 11) vorgesehen ist, mit dem die Pendel (2, 3) zu Schwingungen anregbar sind, wobei der Turmschwingungstilger (1) mindestens einen Schwingungssensor und einen Regler aufweist, wobei, der mindestens eine Aktuator (10, 11) in Abhängigkeit von erfassten Schwingungen angesteuert wird, **dadurch gekennzeichnet, dass** der Aktuator (10, 11) am Koppelelement (5) angreift.

2. Turmschwingungstilger nach Anspruch 1, **dadurch gekennzeichnet, dass** das Koppelelement (5) einen Höhenversatz zwischen der ersten Masse (m₁) und der zweiten Masse (m₂) zulässt.

3. Turmschwingungstilger nach einem der Ansprüche 1 oder 2, **dadurch gekennzeichnet, dass** ein Verhältnis der ersten Masse (m₁) zur zweiten Masse (m₂) größer ist als ein Verhältnis der ersten Pendellänge (l₁) zur zweiten Pendellänge (l₂).

4. Turmschwingungstilger nach einem der Ansprüche 1 bis 3, **dadurch gekennzeichnet, dass** die erste Pendellänge (l₁) und/oder die zweite Pendellänge (l₂) veränderbar ist.

5. Turmschwingungstilger nach einem der Ansprüche 1 bis 4, **dadurch gekennzeichnet, dass** die erste Masse (m₁) und/oder die zweite Masse (m₂) veränderbar ist.

6. Turmschwingungstilger nach einem der Ansprüche 1 bis 5, **dadurch gekennzeichnet, dass** mindestens zwei Aktuatoren (10, 11) vorgesehen sind, die zueinander senkrechte Wirkrichtungen aufweisen.

7. Turm mit einem Turmschwingungstilger nach einem der Ansprüche 1 bis 6, **dadurch gekennzeichnet, dass** der Turmschwingungstilger (1) im Bereich eines Schwingungsbauchs angeordnet ist, wobei der Turmschwingungstilger (1) insbesondere im Bereich eines oberen Endes des Turms (7) angeordnet ist.

8. Turm nach Anspruch 7, **dadurch gekennzeichnet, dass** eine Resonanzfrequenz des Systems aus erstem Pendel (2) und zweitem Pendel (3) kleiner oder gleich einer Eigenfrequenz des Turms (7) ist.

9. Turm nach einem der Ansprüche 7 oder 8, **dadurch gekennzeichnet, dass** eine Resonanzfrequenz des ersten, hängenden Pendels (2) auf eine Eigenfrequenz des Turms abgestimmt ist.

10. Turm nach Anspruch 7, **dadurch gekennzeichnet, dass** er als Windenergieanlage ausgebildet ist.

## Claims

1. Tower vibration damper (1), in particular for a wind turbine, that comprises a first pendulum (2) which has a first pendulum length (l₁) and a first ball weight (m₁) and which is designed as a suspended pendulum, said tower vibration damper comprising a second pendulum (3) which has a second pendulum length (l₂) and a second ball weight (m₂) and which is designed as an upright pendulum, the first ball weight (m₁) and the second ball weight (m₂) being coupled to one another in the direction of action by at least one coupling element (5), at least one actuator (10, 11) that can cause the pendula (2, 3) to vibrate being provided, the tower vibration damper (1) comprising at least one vibration sensor and one controller, the at least one actuator (10, 11) being controlled on the basis of the detected vibrations, **characterised in that** the actuator (10, 11) acts on the coupling element (5).

2. Tower vibration damper according to claim 1, **characterised in that** the coupling element (5) allows for an offset in the height between the first ball weight (m₁) and the second ball weight (m₂).

3. Tower vibration damper according to either claim 1 or claim 2, **characterised in that** a ratio of the first ball weight (m₁) to the second ball weight (m₂) is greater than a ratio of the first pendulum length (l₁) to the second pendulum length (l₂).

4. Tower vibration damper according to any of claims 1 to 3, **characterised in that** the first pendulum length (l₁) and/or the second pendulum length (l₂) can be changed.

5. Tower vibration damper according to any of claims 1 to 4, **characterised in that** the first ball weight (m₁) and/or the second ball weight (m₂) can be changed.

6. Tower vibration damper according to any of claims 1 to 5, **characterised in that** at least two actuators (10, 11) having directions of action perpendicular to one another are provided.

7. Tower comprising a tower vibration damper according to any of claims 1 to 6, **characterised in that** the tower vibration damper (1) is arranged in the region of an antinode, the tower vibration damper (1) being arranged in particular in the region of an upper end of the tower (7).

8. Tower according to claim 7, **characterised in that** a resonance frequency of the system comprising the first pendulum (2) and the second pendulum (3) is no greater than a natural frequency of the tower (7).

9. Tower according to either claim 7 or claim 8, **characterised in that** a resonance frequency of the first, suspended pendulum (2) is matched to a natural frequency of the tower.

10. Tower according to claim 7, **characterised in that** said tower is designed as a wind turbine.

## Revendications

1. Réducteur de vibrations de tour (1), en particulier pour une éolienne, qui présente un premier pendule (2) avec une première longueur de pendule (l₁) et une première masse (m₁) qui est réalisé en tant que pendule suspendu, dans lequel il présente un second pendule (3) avec une seconde longueur de pendule (l₂) et une seconde masse (m₂) qui est réalisé en tant que pendule stationnaire, dans lequel la première masse (m₁) et la seconde masse (m₂) sont couplées l'une à l'autre dans le sens actif par l'intermédiaire d'au moins un élément de couplage (5), dans lequel au moins un actionneur (10, 11) est prévu, avec lequel les pendules (2, 3) peuvent être excités pour réaliser des vibrations, dans lequel le réducteur de vibrations de tour (1) présente au moins un capteur de vibrations et un régulateur, dans lequel l'au moins un actionneur (10, 11) est commandé en fonction de vibrations détectées, **caractérisé en ce que** l'actionneur (10, 11) agit sur l'élément de couplage (5).

2. Réducteur de vibrations de tour selon la revendication 1, **caractérisé en ce que** l'élément de couplage (5) permet un décalage de hauteur entre la première masse (m₁) et la seconde masse (m₂).

3. Réducteur de vibrations de tour selon l'une des revendications 1 ou 2, **caractérisé en ce qu'**un rapport entre la première masse (m₁) et la seconde masse (m₂) est supérieur à un rapport entre la première longueur de pendule (l₁) et la seconde longueur de pendule (1₂).

4. Réducteur de vibrations de tour selon l'une des revendications 1 à 3, **caractérisé en ce que** la première longueur de pendule (l₁) et/ou la seconde longueur de pendule (l₂) est modifiable.

5. Réducteur de vibrations de tour selon l'une des revendications 1 à 4, **caractérisé en ce que** la première masse (m₁) et/ou la seconde masse (m₂) est modifiable.

6. Réducteur de vibrations de tour selon l'une des revendications 1 à 5, **caractérisé en ce qu'**au moins deux actionneurs (10, 11) sont prévus, lesquels présentent des sens actifs perpendiculaires l'un à l'autre.

7. Tour avec un réducteur de vibrations de tour selon l'une des revendications 1 à 6, **caractérisée en ce que** le réducteur de vibrations de tour (1) est agencé dans la zone d'un ventre de vibrations, dans laquelle le réducteur de vibrations de tour (1) est agencé en particulier dans la zone d'une extrémité supérieure de la tour (7).

8. Tour selon la revendication 7, **caractérisée en ce qu'**une fréquence de résonance du système du premier pendule (2) et second pendule (3) est inférieure ou égale à une fréquence propre de la tour (7).

9. Tour selon l'une des revendications 7 ou 8, **caractérisée en ce qu'**une fréquence de résonance du premier pendule (2) suspendu est adaptée à une propre fréquence de la tour.

10. Tour selon la revendication 7, **caractérisée en ce qu'**elle est réalisée en tant qu'éolienne.
